(19) Europäisches Patentamt
European Patent Office
Office européen des brevets

(11) Veröffentlichungsnummer: **0 302 240 B1**

(12) # EUROPÄISCHE PATENTSCHRIFT

(45) Veröffentlichungstag der Patentschrift: **02.01.92**

(51) Int. Cl.$^5$: **C09D 7/12**, B05D 7/16, C09D 5/38, C09D 175/04

(21) Anmeldenummer: **88110650.4**

(22) Anmeldetag: **04.07.88**

Verbunden mit 88905800.4/0370038 (europäische Anmeldenummer/Veröffentlichungsnummer) durch Entscheidung vom 07.06.91.

(54) **Verfahren zur Herstellung eines mehrschichtigen schützenden und/oder dekorativen Überzugs und wasserverdünnbare Beschichtungszusammensetzungen.**

(30) Priorität: **01.08.87 DE 3725600**

(43) Veröffentlichungstag der Anmeldung:
**08.02.89 Patentblatt 89/06**

(45) Bekanntmachung des Hinweises auf die Patenterteilung:
**02.01.92 Patentblatt 92/01**

(84) Benannte Vertragsstaaten:
**AT BE CH DE ES FR GB IT LI NL SE**

(56) Entgegenhaltungen:
**EP-A- 0 079 836**
**EP-A- 0 089 497**
**EP-A- 0 228 003**
**US-A- 3 455 705**

**J. SOC. COSMET. CHEM., Band 32, September-Oktober 1981, Seiten 275-285, P.A. CIULLO: "Rheological properties of magnesium aluminum silicate/xanthan gum dispersions"**

(73) Patentinhaber: **BASF Lacke + Farben Aktiengesellschaft**
**Max-Winkelmann-Strasse 80**
**W-4400 Münster(DE)**

(72) Erfinder: **Müller, Bodo Dr.**
**Mergentheimer Strasse 8**
**W-8700 Würzburg(DE)**
Erfinder: **Martin, Eric**
**Sartoriusstrasse 10**
**W-8700 Würzburg(DE)**

(74) Vertreter: **Leifert, Elmar, Dr.**
**BASF Lacke + Farben AG Patentabteilung**
**Max-Winkelmann-Strasse 80 Postfach 61 23**
**W-4400 Münster(DE)**

EP 0 302 240 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung eines mehrschichtigen, schützenden und/oder dekorativen Überzugs auf einer Substratoberfläche, bei welchem

(1) als Basisbeschichtungszusammensetzung eine wasserverdünnbare Basisbeschichtungszusammensetzung aufgebracht wird, wobei diese Basisbeschichtungszusammensetzung Wasser ggf. organische Lösemittel, ein wasserverdünnbares Bindemittel, Pigmentteilchen und ein Verdickungsmittel enthält,

(2) aus der in Stufe (1) aufgebrachten Zusammensetzung ein Polymerfilm auf der Oberfläche gebildet wird,

(3) auf der so erhaltenen Basisschicht eine geeignete transparente Deckschichtzusammensetzung aufgebracht wird und anschließend

(4) die Basisschicht zusammen mit der Deckschicht eingebrannt wird.

Insbesondere bei der Automobillackierung, aber auch in anderen Bereichen, in denen man Überzüge mit guter dekorativer Wirkung und gleichzeitig einen guten Korrosionsschutz wünscht, ist es bekannt, Substrate mit mehreren, übereinander angeordneten Überzugsschichten zu versehen.

Mehrschichtlackierungen werden bevorzugt nach dem sogenannten "Basecoat/Clearcoat"-Verfahren aufgebracht, d.h. es wird ein pigmentierter Basislack vorlackiert und nach kurzer Ablüftzeit ohne Einbrennschritt (naß-in-naß-Verfahren) mit Klarlack überlackiert. Anschließend werden Basislack und Klarlack zusammen eingebrannt.

Besonders große Bedeutung hat das "Basecoat/Clearcoat"-Verfahren bei der Applikation von Automobil-Metalleffektlacken erlangt.

Wirtschaftliche und ökologische Gründe haben dazu geführt, daß versucht wurde, bei der Herstellung von Mehrschichtüberzügen wäßrige Basisbeschichtungszusammensetzungen einzusetzen.

Die Beschichtungszusammensetzungen zur Herstellung dieser Basisschichten müssen nach dem heute üblichen rationellen "naß-in-naß"-Verfahren verarbeitbar sein, d.h. sie müssen nach einer möglichst kurzen Vortrocknungszeit ohne Einbrennschritt mit einer transparenten Deckschicht überlackiert werden können, ohne störende Anlöseerscheinungen und "strike-in"-Phänomene zu zeigen.

Bei der Entwicklung von Beschichtungszusammensetzungen zur Herstellung von Basisschichten von Metalleffektlacken des Basecoat/Clearcoat-Typs müssen außerdem noch weitere Probleme gelöst werden. Der Metalleffekt hängt entscheidend von der Orientierung der Metallpigmentteilchen im Lackfilm ab. Ein im "naß-in-naß"-Verfahren verarbeitbarer Metalleffektbasislack muß demnach Lackfilme liefern, in denen die Metallpigmente nach der Applikation in einer günstigen räumlichen Orientierung vorliegen und in denen diese Orientierung schnell so fixiert wird, daß sie im Laufe des weiteren Lackierprozesses nicht gestört werden kann.

Aus der DE-OS-35 45 618 ist ein Verfahren gemäß dem Oberbegriff des Patentanspruchs 1 bekannt. Nach dem in der DE-OS-35 45 618 beschriebenen Verfahren konnen Zweischichtlackierungen des Basecoat/Clearcoat-Typs, insbesondere Zweischichtmetalleffektlackierungen, erhalten werden, die ausßezeichnete Eigenschaften haben.

Das in der DE-OS-35 45 618 offenbarte Verfahren hat aber den Nachteil, daß die dort eingesetzten wasserverdünnbaren Basisbeschichtungszusammensetzungen eine mangelnde Scher-bzw. Ringleitungsstabilität aufweisen und nach relativ kurzer Lagerzeit Farbtonverschiebungen und unerwünschte Viskositätsänderungen zeigen.

Die der vorliegenden Erfindung zugrundeliegende Aufgabenstellung besteht in der Bereitstellung eines neuen Verfahrens gemäß Oberbegriff des ersten Patentanspruchs. Insbesondere sollen die oben dargelegten Probleme des Standes der Technik überwunden bzw. vermindert werden.

Diese Aufgabe wird überraschenderweise durch ein Verfahren gemäß Oberbegriff des ersten Patentanspruchs gelöst, das dadurch gekennzeichnet ist, daß die Basisbeschichtungszusammensetzung als Verdikkungsmittel ein Schichtsilikat in Kombination mit Xanthan enthält.

Die mit der Erfindung erreichten überraschenden Vorteile sind im wesentlichen darin zu sehen, daß die erfindungsgemäß eingesetzten wasserverdünnbaren Basisbeschichtungszusammensetzungen verbesserte Scher- bzw. Ringleitungsstabilität und eine verbesserte Lagerstabilität aufweisen. Ein weiterer wichtiger Vorteil besteht darin, daß die erfindungsgemäß eingesetzten Basislacke mit niedrigem Festkörpergehalt (15 bis 20 Gew.-%) appliziert werden können. Je niedriger der Festkörper, desto effektstärker ist der erhaltene Metalleffekt.

In der US-PS 3,455,705 wird die Verwendung von Schichtsilikat-Xanthan-Mischungen als Suspendierhilfsmittel in wäßrigen, Siliciumdioxid enthaltenden Beschichtungszusammensetzungen beschrieben. Die in der US-PS 3,455,705 offenbarten Beschichtungszusammensetzungen dienen zur Herstellung von thermisch sehr hoch belastbaren Beschichtungen (z. B. zur Herstellung von Beschichtungen auf Oberflächen, die mit

geschmolzenem Metall in Berührung kommen). Die US-PS 3,455,705 enthält keinerlei Hinweise zur Lösung der der vorliegenden Erfindung zugrundeliegenden Aufgabenstellung.

In J. Soc. Cosmet. Chem. , Band 32, Seiten 275 - 285 wird beschrieben, daß Kombinationen aus Schichtsilikat und Xanthan zur Lösung des bei Kosmetika auftretenden Problems ansteigender Viskositäten bei steigenden Lagerzeiten geeignet sind. Der Zeitschriftenartikel enthält keinerlei Hinweis auf Mehrschichtlackierungen des Basecoat/Clearcoat-Typs und die der vorliegenden Erfindung zugrundeliegende Aufgabenstellung.

Der erste Schritt des erfindungsgemäßen Verfahrens besteht in der Applikation einer wasserverdünnbaren Basisbeschichtungszusammensetzung.

Im folgenden sollen die einzelnen Komponenten der erfindungsgemäß eingesetzten Basisbeschichtungszusammensetzungen näher erläutert werden.

Flüssiges Verdünnungsmittel

Die erfindungsgemäß eingesetzten Basisbeschichtungszusammensetzungen enthalten als flüssiges Verdünnungsmittel Wasser, das ggf. auch noch organische Lösungsmittel enthalten kann. Der Anteil an organischen Lösungsmitteln wird so gering wie möglich gehalten.

Als Beispiele für Lösungsmittel, die im Wasser vorhanden sein können, seien heterocyklische, aliphatische oder aromatische Kohlenwasserstoffe, ein- oder mehrwertige Alkohole, Ether, Ester, Ketone und Amide, wie z. B. N-Methylpyrrolidon, Dimethylformamid, Toluol, Xylol, Butanol, Ethyl- und Butylglykol sowie deren Acetate, Butyldiglykol, Diethylenglykoldimethylether, Cyclohexanon, Methylethylketon, Aceton, Isophoron oder Mischungen davon genannt.

Wasserverdünnbares Bindemittel

Die erfindungsgemäß eingesetzten Basisbeschichtungszusammensetzungen können im Prinzip alle für den in Rede stehenden Zweck geeigneten wasserverdünnbaren Bindemittel enthalten. Als Beispiele für brauchbare wasserverdünnbare Bindemittel seien wasserverdünnbare Polyacrylate, wasserverdünnbare Polyester, wasserverdünnbare Polyether, wasserverdünnbare Melamin- und Harnstoffharze und wasserverdünnbare Polyurethanharze genannt (vgl. EP-A-158 099).

Bevorzugt werden Basisbeschichtungszusammensetzungen eingesetzt, die wasserverdünnbare Polyurethanharze als Bindemittel enthalten.

Besonders bevorzugte Basisbeschichtungszusammensetzungen werden erhalten, wenn die in der deutschen Offenlegungsschrift DE-OS-35 45 618 offenbarten Bindemittel eingesetzt werden. Es handelt sich dabei um Polyurethanharze, die eine Säurezahl von 5 bis 70 aufweisen und die herstellbar sind, indem aus

(I) Polyether- und/oder Polyesterpolyolen mit einem Molekulargewicht von 400 bis 3000 (Zahlenmittel),

(II) Diisocyanaten und

(III) Verbindungen, die zwei gegenüber Isocyanatgruppen reaktive Gruppen enthalten, wobei zumindest ein Teil der als Komponente (III) eingesetzten Verbindungen mindestens eine zur Anionenbildung befähigte Gruppe aufweist,

ein endständige Isocyanatgruppen aufweisendes Zwischenprodukt hergestellt wird, dessen freie Isocyanatgruppen anschließend mit einem mindestens drei Hydroxylgruppen enthaltenden Polyol, vorzugsweise Triol, umgesetzt werden.

Die Herstellung des aus den Komponenten (I), (II) und (III) aufgebauten endständige Isocyanatgruppen aufweisenden Zwischenproduktes und die Umsetzung dieses Zwischenproduktes mit dem Polyol erfolgt nach gut bekannten Verfahren der Polyurethanchemie. Die Umsetzungen werden bevorzugt in Lösungsmitteln durchgeführt, die gegenüber Isocyanatgruppen inert und mit Wasser mischbar sind. Besonders gut geeignete Lösungsmittel sind Aceton und Methylethylketon. Die Neutralisation der zur Anionenbildung befähigten Gruppen kann vor, während oder nach der Synthese des Polyurethanharzes erfolgen.

Als Komponente (I) können prizipiell alle bei der Herstellung von Bindemitteln auf Polyurethanbasis gebräuchliche Polyether- und/oder Polyesterpolyole mit einem Molekulargewicht von 400 bis 3000 (Zahlenmittel) eingesetzt werden. Bevorzugt werden Polyether- und/oder Polyesterdiole eingesetzt.

Als Beispiele für Polyetherpolyole seien Polyoxyalkylenpolyole, insbesondere Poly(oxypropylen)glykole mit einem Molekulargewicht von 300 bis 3000 (Zahlenmittel) genannt.

Die als Komponente (I) verwendbaren Polyesterpolyole können nach allgemein bekannten Methoden durch Veresterung von organischen Dicarbonsäuren oder ihrer Anhydride mit organischen Diolen hergestellt werden. Dabei können auch Säureund/oder Hydroxylkomponenten mitverwendet werden, deren Funktionalität größer als 2 ist.

Es können auch Polyesterdiole, die sich von Laktonen ableiten, als Komponente (I) verwendet werden. Diese Produkte erhält man beispielsweise durch Umsetzung von ε-Caprolakton mit einem Diol. Solche Produkte sind in der US-PS 3169945 beschrieben.

Ganz besonders bevorzugte Polyurethanharzbindemittel werden erhalten, wenn als Komponente (I) Polyesterpolyole eingesetzt werden, deren Säurekomponente zumindest zum Teil aus dimeren Fettsäuren besteht. Solche Bindemittel sind in der US-PS 4,423,179 beschrieben.

Als Komponente (II) können alle für die Polyurethanbindemittelherstellung geeigneten Diisocyanate eingesetzt werden.

Die als Komponente (III) eingesetzten Verbindungen enthalten als mit Isocyanatgruppen reagierende Gruppen vorzugsweise Hydroxylgruppen. Es können auch aminogruppenhaltige Verbindungen eingesetzt werden. Solche Verbindungenn können aber einen negativen Einfluß auf die Applikationseigenschaften der Beschichtungszusammensetzungen haben. Art und Menge von ggf. einzusetzenden aminogruppenhaltigen Verbindungen sind vom Durchschnittsfachmann durch einfach durchzuführende Routineuntersuchungen zu ermitteln.

Als zur Anionenbildung befähigte Gruppen kommen vor allem Carboxyl- und Sulphonsäuregruppen in Betracht.

Als Beispiele für Verbindungen, die mindestens zwei mit Isocyanatgruppen reagierende Gruppen und mindestens eine zur Anionenbildung befähigte Gruppe enthalten, seien Dihydroxypropionsäure, Dimethylolpropionsäure, Dihydroxybernsteinsäure oder Dihydroxybenzosäure genannt.

Zur Neutralisation der anionischen Gruppen werden vorzugsweise tertiäre Amine, wie z.B. Trimethylamin, Triethylamin, Dimethylanilin, N-Ethylmorpholin, Diethylanilin, Triphenylamin udgl. verwendet.

Als Verbindungen, die zwei gegenüber Isocyanatgruppen reaktive Gruppen aufweisen, jedoch frei von zur Anionenbildung befähigten Gruppen sind, können beispielsweise niedermolekulare Diole oder Diamine mit primären oder sekundären Aminogruppen eingesetzt werden.

Die Umsetzung des aus (I), (II) und (III) gebildeten isocyanatgruppenhaltigen Zwischenproduktes mit einem mindestens drei Hydroxylgruppen enthaltenden Polyol wird vorzugsweise so gesteuert, daß es zu Kettenverlängerungen und ggf. auch zu Verzweigungen der Bindemittelmolekule kommt. Bei dieser Umsetzung muß sorgfältig darauf geachtet werden, daß keine vernetzten Produkte erhalten werden.

Als Beispiele für mindestens drei Hydroxylgruppen enthaltende Polyole seien Trimethylolpropan, Glycerin, Erythrit, Mesoerythrit, Arabit, Adonit usw. genannt. Bevorzugt wird Trimethylolpropan eingesetzt.

Das aus den Komponenten (I), (II), (III) und Polyol erhaltene Produkt kann nach Neutralisierung der zur Anionenbildung befähigten Gruppen in eine wäßrige Phase überführt werden. Die so erhaltene Bindemitteldispersion kann dann in die erfindungsgemäß verwendeten, wasserverdünnbaren Basisbeschichtungszusammensetzungen inkorporiert werden.

Ganz besonders bevorzugte wasserverdünnbare Basisbeschichtungszusammensetzungen werden erhalten, wenn die in der US-PS 4,423,179 offenbarten wasserverdünnbaren Polyurethane als Bindemittel eingesetzt werden.

In vielen Fällen ist es wünschenswert, die Eigenschaften der erhaltenen Überzüge durch Mitverwendung weiterer Bindemittelsysteme gezielt zu verbessern.

Die erfindungsgemäß eingesetzten, Polyurethanharze enthaltenden Basisbeschichtungszusammensetzungen enthalten vorteilhafterweise als zusätzliche Bindemittelkomponente ein wasserverdünnbares Melaminharz in einem Anteil von 1 bis 80 Gew.-%, bevorzugt 30 bis 70 Gew.-%, bezogen auf den Anteil des wasserverdünnbaren Polyurethanharzes.

Wasserverdünnbare Melaminharze sind an sich bekannt und werden in größerem Umfang eingesetzt. Es handelt sich hierbei im allgemeinen um veretherte Melamin-Formaldehyd-Kondensationsprodukte. Ihre Wasserlöslichkeit hängt - abgesehen vom Kondensationsgrad, der möglichst niedrig sein soll, -von der Veretherungskomponente ab, wobei nur die niedrigsten Glieder der Alkanol- bzw. Ethylenglykolmonoetherreihe wasserlösliche Kondensate ergeben. Die größte Bedeutung haben die mit Methanol veretherten Melaminharze. Bei Verwendung von Lösungsvermittlern können auch butanolveretherte Melaminharze in wäßriger Phase dispergiert werden.

Es besteht auch die Möglichkeit, Carboxylgruppen in das Kondensat einzufügen. Umetherungsprodukte hochveretherter Formaldehydkondensate mit Oxycarbonsäuren sind über ihre Carboxylgruppe nach Neutralisation wasserlöslich und können in den erfindungsgemäß eingesetzten Basisbeschichtungszusammensetzungen enthalten sein.

Anstelle der beschriebenen Melaminharze können auch andere wasserlösliche oder wasserdispergierbare Aminoharze wie z.B. Harnstoffharze eingesetzt werden.

Wenn die Basisbeschichtungszusammensetzung ein Melaminharz enthält, kann sie vorteilhafterweise zusätzlich als weitere Bindemittelkomponente ein wasserverdünnbares Polyesterharz und/oder ein wasserverdünnbares Polyacrylatharz enthalten, wobei das Gewichtsverhältnis Melaminharz zu Polyester-/Polyacrylatharz 2:1 bis 1:4 beträgt und das Gewichtsverhältnis Melaminharz plus Polyester und/oder Polyacrylatharz zu Polyurethanharz 4:1 bis 1:4, bevorzugt 2:1 bis 1:2, besonders bevorzugt 1:3:1 bis 1:1:3, beträgt.

Als wasserverdünnbare Polyesterharze werden vorzugsweise Hydroxylgruppen tragende Polyesterharze eingesetzt. Die erfindungsgemäß eingesetzten Polyesterharze enthalten als solubilisierende Gruppen vorzugsweise Carboxylatgruppen.

Wasserverdünnbare Polyesterharze der oben beschriebenen Art sind an sich bekannt und können durch Umsetzung von mehrwertigen Polyolen mit Polycarbonsäuren bzw. Polycarbonsäureanhydriden hergestellt werden.

Bevorzugt werden Polyesterharze mit einer mittleren Funktionalität pro Molekül von 2,5 bis 10 und mit einem mittleren Kondensationsgrad pro Molekül von 10 bis 25 eingesetzt. Der Kondensationsgrad gibt die Summe der Monomerbausteine in der Kette des Polymermoleküls an.

Die eingesetzten Polyesterharze weisen bevorzugt eine Säurezahl von höchstens 30 und eine Hydroxylzahl von höchstens 150 auf.

Für die Synthese der Polyesterharze bevorzugte Säurekomponenten sind aliphatische, cycloaliphatische gesättigte oder ungesättigte und/oder aromatische mehrbasische Carbonsäuren, vorzugsweise Di-, Tri- und Tetracarbonsäuren, mit 2 bis 14, vorzugsweise 4 bis 12 C-Atomen pro Molekül oder deren veresterungsfähige Derivate (z.B. Anhydride oder Ester), z.B. Phthalsäureanhydrid, Isophthalsäure, Terephthalsäure, Tetrahydro- und Hexahydrophthalsäureanhydrid, Endomethylentetrahydrophthalsäure, Bernsteinsäure, Glutarsäure, Sebacinsäure, Azelainsäure, Trimellithsäure und Trimellithsäureanhydrid, Pyromellithsäureanhydrid, Fumarsäure und Maleinsäure. Phthalsäureanhydrid ist die gebräuchlichste Säurekomponente. Die Polyesterharze sollen nicht mehr als 20 Mol-%, bezogen auf die einkondensierten Polycarbonsäurereste, Fumar- und Maleinsäurereste enthalten.

Für die Synthese der Polyester bevorzugte Polyole sind aliphatische, cycloaliphatische und/oder araliphatische Alkohole mit 1 bis 15, vorzugsweise 2 bis 6 C-Atomen, und 1 bis 6, vorzugsweise 1 bis 4, an nicht-aromatische C-Atome gebundene OH-Gruppen pro Molekül, z.B. Glykole wie Ethylenglykol, Propandiol-1,2 und -1,3, Butandiol-1,2, -1,3 und -1,4, 2-Ethylpropandiol-1,3, 2-Ethylhexandiol-1,3, Neopentylglykol, 2,2-Trimethylpentandiol-1,3, Hexandiol-1,6, Cyclohexandiol-1,2 und -1,4, 1,2- und 1,4-Bis-(hydroxymethyl-)cyclohexan, Adipinsäure-bis-(ethylenglykolester); Etheralkohole wie Di- und Triethylenglykol, Dipropylenglykol; Dimethylolpropionsäure, oxalkylierte Bisphenole mit zwei $C_2$-$C_3$-Oxalkylgruppen pro Molekül, perhydrierte Bisphenole; Butantriol-1,2,4, Hexantriol-1,2,6, Trimethylolethan, Trimethylolpropan, Trimethylolhexan, Glycerin, Pentaerythrit, Dipentaerythrit, Mannit und Sorbit; kettenabbrechende einwertige Alkohole mit 1 bis 8 Kohlenstoffatomen wie Propanol, Butanol, Cyclohexanol und Benzylalkohol, Hydroxypivalinsäure. Die gebräuchlichsten Alkohole sind Glycerin, Trimethylolpropan, Neopentylglykol und Pentaerythrit.

Die erfindungsgemäß einsetzbaren Polyesterharze können auch mit Monocarbonsäure und Monoalkoholen modifiziert sein.

Als Beispiele für Monocarbonsäuren werden Benzoesäure, p-tert.-Butylbenzoesäure, Hexahydrobenzoesäure und Abietinsäure genannt.

Als Beispiele für Monoalkohole werden Methanol, Propanol, Cyclohexanol, 2-Ethylhexanol und Benzylalkohol genannt.

Es ist auch möglich, bis zu 25 % der Esterbindungen durch Urethanbindungen zu ersetzen.

Bevorzugte Polyacrylatharze erhält man durch Copolymerisation von Vinyl- bzw. Vinylidenmonomeren, wie z.B. Styrol, $\alpha$-Methylstyrol, o- bzw. p-Chlorstyrol, o-, m- oder p-Methylstyrol, p-tert.-Butylstyrol, (Meth-)Acrylsäure, (Meth-)Acrylnitril, Acryl- und Methacrylsäurealkylester mit 1 bis 8 C-Atomen in der Alkoholkomponente, beispielsweise Ethylacrylat, Methylacrylat, n- bzw. iso-Propylacrylat, n-Butylacrylat, 2-Ethylhexylacrylat, 2-Ethylhexylmethacrylat, Isooctylacrylat, tert.-Butylacrylat, Methylmethacrylat, Ethylmethacrylat, n- bzw. iso-Propylmethacrylat, Butylmethacrylat, Isooctylmethacrylat und ggf. Mischungen derselben; Hydroxyalkyl(meth)acrylate mit 2 bis 4 C-Atomen in der Alkylgruppe, z.B. 2-Hydroxyethyl(meth-)acrylat, 2-Hydroxypropyl(meth-)acrylat, 4-Hydroxybutyl(meth-)acrylat; Trimethylolpropanmono(meth-)acrylat, Pentaerythritmono(meth-)acrylat und deren Ester mit Fettsäuren, Diester der Fumarsäure, Itaconsäure, Maleinsäure mit 4 bis 8 Kohlenstoffatomen in der Alkoholkomponente; Acrylnitril, (Meth)acrylsäureamid, Vinylester von Alkanmonocarbonsäuren mit 2 bis 5 Kohlenstoffatomen wie Vinylacetat oder Vinylpropionat oder Mischungen der genannten Monomeren, N-Methoxymethyl(meth)acrylsäureamid.

Bevorzugte Monomere sind Styrol und (Meth)Acrylsäurealkylester mit 1 bis 8 C-Atomen in der Alkoholkomponente, das Veresterungsprodukt aus Fettsäure und Hydroxyalkylacrylaten und deren Mischungen.

Als wasserverdünnbare Polyether werden bevorzugt lineare oder verzweigte hydroxylgruppenhaltige Polyether eingesetzt. Als Beispiele seien Poly(oxypropylen)glykole mit einem mittleren Molekulargewicht von 400 bis 1000, bevorzugt von 600 bis 900, genannt.

Als Vernetzungsmittel können auch blockierte Polyisocyanate eingesetzt werden.

Die in dem erfindungsgemäßen Verfahren eingesetzten Basisbeschichtungszusammensetzungen enthalten 5 bis 30 Gew.-%, bevorzugt 10 bis 25 Gew.-%, wasserverdünnbare Bindemittelbestandteile.

Pigmente

Die erfindungsgemäß eingesetzten Basisbeschichtungszusammensetzungen können alle für das Basecoat/Clearcoat-Verfahren geeigneten Pigmente enthalten. Als Beispiele seien Titandioxid, Graphit, Ruß, Phthalocyaninblau, Chromoxid. Perylentetracarbonsäureimide u. dgl. genannt.

Die erfindungsgemäß eingesetzten Basisbeschichtungszusammensetzungen enthalten ganz besonders bevorzugt Metallplättchenpigmente, besonders bevorzugt Aluminiumplattchenpigmente. Die Metallplättchenpigmente können auch zusammen mit Farbpigmenten eingesetzt werden. In diesem Fall wird Art und Menge der Farbpigmente so gewählt, daß der erwünschte Metalleffekt nicht unterdrückt wird.

Es konnen auch mit Metalloxiden beschichtete Glimmerplättchen (z.B. Mica) als Effektpigmente anstelle oder in Kombination mit Aluminiumplattchenpigmenten eingesetzt werden.

Der Metallplättchenpigmentgehalt der erfindungsgemäß eingesetzten Basisbeschichtungszusammensetzungen beträgt -bezogen auf den Gesamtbindemittelfestkörper - bis zu 25 Gew.-%, vorzugsweise 12 bis 18 Gew.-%.

Verdickungsmittel

Es ist erfindungswesentlich, daß die erfindungsgemäß eingesetzten Basisbeschichtungszusammensetzungen als Verdickungsmittel ein Schichtsilikat in Verbindung mit Xanthan enthalten.

Die erfindungsgemäß eingesetzten Basisbeschichtungszusammensetzungen enthalten in der Regel 0,5 bis 10 Gew.-% , bezogen auf den Gesamtfestkörpergehalt, Verdickungsmittel (der Gehalt an Verdickungsmittel errechnet sich als Summe aus dem Gehalt an Schichtsilikat und dem Gehalt an Xanthan). In den Fällen, in denen keine Metallpigmente enthalten sind, werden 0,5 bis 5 Gew.-%, vorzugsweise 1,4 bis 3 Gew.-%, bezogen auf den Gesamtfestkörper, Verdickungsmittel eingesetzt. In Metallplättchenpigmente enthaltenden Beschichtungszusammensetzungen werden 2 bis 10 Gew.-%, vorzugsweise 3 bis 6 Gew.-%, bezogen auf den Gesamtfestkörper, Verdickungsmittel eingesetzt.

Je nach Gewichtsverhältnis zwischen Schichtsilikat und Xanthan andern die erfindungsgemäß eingesetzten Basisbeschichtungszusammensetzungenihre Applikations- und Effekteigenschaften. Der Durchschnittsfachmann kann mit allgemein üblichen Routinemethoden das für den jeweiligen Anwendungszweck optimale Schichtsilikat/Xanthan-Verhältnis ermitteln. In Metallplättchenpigmente enthaltenden Basisbeschichtungszusammensetzungen werden Schichtsilikat und Xanthan üblicherweise in Gewichtsverhältnissen von 99:1 bis 50:50 eingesetzt. Besonders gute Resultate werden bei Gewichtsverhältnissen von 95:5 bis 65:35 erhalten.

Schichtsilikate, die als Verdickungsmittel für wäßrige Beschichtungszusammensetzungen verwendbar sind, sind dem Fachmann gut bekannt (vgl. z.B. H. Kittel, Lehrbuch der Beschichtungen, Bd. II, Seite 340, und Bd. III, Seite 272 bis Seite 274; Verlag W.A. Colomb 1974, 1976). Es handelt sich hierbei vor allem um Aluminium-Magnesium-Silikatverbindungen vom Typ Montmorillonit, Z.B. Attapulgit, Bentonit oder Hectorit. Hectorit wird oft mit der ungefähren Summenformel $Na_{0,67}(Mg,Li)_6\ Si_8O_{20}(OH,F)_4$, wobei Li und F auch fehlen können, beschrieben.

Erfindungsgemäß können sowohl natürliche als auch synthetisch hergestellte Schichtsilikate eingesetzt werden. Vorzugsweise werden synthetisch hergestellte Natrium-Magnesium- bzw. Natrium-Magnesium-Fluor-Lithium-Schichtsilikate des Montmorillonit-Typs eingesetzt.

Selbstverständlich sind auch modifizierte, Z.B. mit Schutzkolloiden bzw. Peptisatoren modifizierte Schichtsilikate, sowie Mischungen unterschiedlicher Schichtsilikate einsetzbar.

Xanthan (englisch: xanthan gum) ist ein allgemein bekanntes Verdickungsmittel, das auch in wäßrigen Beschichtungszusammensetzungen, insbesondere Latexfarben, eingesetzt wird. Angesichts der großen Anzahl unterschiedlichster Verdickungsmittel war es überraschend und nicht vorhersehbar, daß ausgerechnet mit Xanthan die einleitend beschriebenen Probleme gelöst werden können.

Xanthan ist ein vom Bakterienstamm Xanthomonas campestris abgeschiedenes hochpolymeres Heteropolysaccharid (Molekularmasse etwa 2 Millionen) mit folgender Struktur:

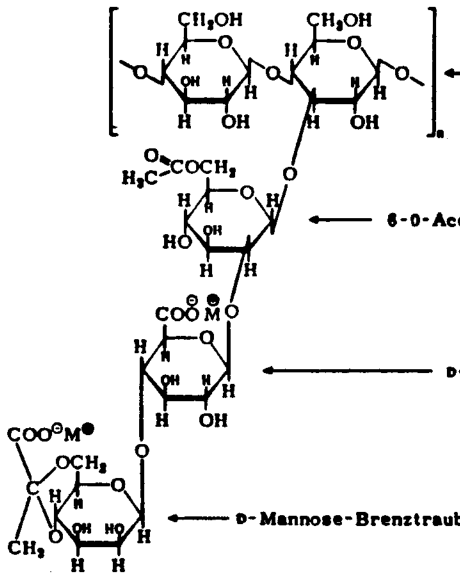

β-1,4-Glukan

6-O-Acetyl-D-mannose

D-Glucuronsäure

D-Mannose-Brenztraubensäure-acetal

Xanthan

Die erfindungsgemäßen Basisbeschichtungszusammensetzungen können auch weitere übliche Zusätze wie Füllstoffe, Weichmacher, Stabilisatoren, Netzmittel, Dispergierhilfsmittel, Verlaufsmittel, Entschäumer und Katalysatoren einzeln oder im Gemisch in den üblichen Mengen enthalten.

Nach Applikation der Basisbeschichtungszusammensetzungen wird nach einer kurzen Ablüftzeit ohne Einbrennschritt mit einer geeigneten transparenten Deckschichtzusammensetzung überlackiert. Es können konventionelle lösungsmittelhaltige Klarlacke, wasserverdünnbare Klarlacke oder Pulverklarlacke aufgebracht werden.

Schließlich wird die Basisschicht zusammen mit der Deckschicht eingebrannt.

Die Erfindung betrifft auch wasserverdünnbare Beschichtungszusammensetzungen, die zur Herstellung der Basisschicht von Zweischichtlackierungen des Basecoat/Clearcoat-Typs geeignet sind und die Wasser, ggf. organische Lösemittel, ein wasserverdünnbares Polyurethanharz, Pigmentteilchen und ein Verdickungsmittel enthalten, dadurch gekennzeichnet, daß sie als Verdickungsmittel ein Schichtsilikat in Kombination mit Xanthan enthalten.

Zur näheren Beschreibung der erfindungsgemäßen Beschichtungszusammensetzungen wird auf die Seiten 4 bis 15 dieser Beschreibung verwiesen.

Als zu beschichtende Substrate kommen vor allem vorbehandelte Metallsubstrate in Frage; es können aber auch nichtvorbehandelte Metalle und beliebige andere Substrate, wie z.B. Holz, Kunststoffe usw., unter Verwendung der erfindungsgemäßen Basisbeschichtungszusammensetzungen mit einer mehrschichtigen, schützenden und/oder dekorativen Beschichtung des Basecoat/Clearcoat-Typs überzogen werden.

Die Erfindung wird in den folgenden Beispielen näher erläutert. Alle Angaben über Teile und Prozentsätze sind Gewichtsangaben, falls nicht ausdrücklich etwas anderes festgestellt wird.

1. Herstellung wäßriger Verdickungsmitteldispersionen

1.1 Verdickungsmittel (I) (Schichtsilikat in Kombination mit Xanthan)

2,4 Gew.-Teile eines gereinigten Natrium-Magnesium-Fluor-Lithium-Schichtsilikats vom Montmorillonittyp werden unter starkem Rühren (Dissolver: 3000 bis 4000 Umdrehungen pro Minute) langsam zu 50 Gew.-Teilen deionisiertem Wasser gegeben. Danach werden unter starkem Rühren 2,4 Gew.-Teile eines unverzeigten Poly(propylenoxids) mit einem mittleren Molekulargewicht von 900 und einer OH-Zahl von 125 zugegeben, und es wird 15 Minuten weitergerührt. Danach erfolgt die Zugabe von weiteren 44,6 Gew.-Teilen deionisierten Wassers, und es wird noch 15 Minuten weitergerührt. Dann werden nach Absenkung der Rührgeschwindigkeit (Dissolver: 600-1400 Umdrehungen pro Minute) 0,6 Gew-Teile Rhodopol 50 MD (Xanthan, Handelsprodukt der Firma Rhone-Poulenc) zugegeben. Es wird noch weitere 60 Minuten gerührt. Die so hergestellte, leicht opake Dispersion wird unter Druck über einen 5 μ-CunoFilter filtriert.

1.2 Verdickungsmittel (II) (nur Schichtsilikat, ohne Xanthan)

3 Gew.-Teile eines gereinigten Natrium-Magnesium-Fluor-Lithium-Schichtsilikats vom Montmorillonittyp werden unter starkem Rühren (Dissolver: 3000 bis 4000 Umdrehungen pro Minute) langsam zu 50 Gew.-Teilen deionisiertem Wasser gegeben. Danach werden unter starkem Rühren 3 Gew.-Teile eines unverzweigten Poly(propylenoxids) mit einem mittleren Molekulargewicht von 900 und einer OH-Zahl von 125 zugegeben, und es wird 15 Minuten weitergerührt. Danach erfolgt die Zugabe von weiteren 44 Gew.-Teilen deionisierten Wassers, und es wird noch 15 Minuten weitergerührt.

2. Herstellung von Zweischichtlackierungen

Die Herstellung der Zweischichtlackierungen erfolgt -mit Ausnahme der unten beschriebenen Abänderungen -gemäß den in der EP-A-89497 bzw. US-PS-4,489,135 oder US-PS-4,558,090 angegebenen experimentellen Angaben.

Gegenüber den in der EP-A-89,497 und US-PS-4,489,135 bzw. US-PS 4,558,090 gemachten Angaben zur Herstellung der Basisbeschichtungszusammensetzungen wurden folgende Abänderungen vorgenommen:

a) Anstelle der in der EP-A-89497 bzw. US-PS-4,489,135 oder US-PS-4,558,090 eingesetzten Polyurethandispersionen wurden äquivalente Mengen der in der DE-OS-35 45 618 offenbarten Polyurethandispersionen verwendet.

b) Anstelle der in der EP-A-89497 bzw. US-PS-4,489,135 oder US-PS-4,558,090 eingesetzten Verdikkungsmittel wurden äquivalente Mengen der nach den obigen Vorschriften 1.1 und 1.2 hergestellten Verdickungsmittel verwendet.

Die so hergestellten Beasisbeschichtungszusammensetzungen werden durch Spritzapplikation auf gebonderte Stahlbleche appliziert und nach einer Zwischenablüftzeit von 15 Minuten bei Raumtemperatur (ca. 20 °C) wie in der EP-A-89497 und den US-Patentschriften 4,489,135 sowie 4,558,090 beschrieben mit einem Klarlack überzogen und eingebrannt.

Die Basisbeschichtungszusammensetzungen, die das Verdickungsmittel (I) enthalten, weisen gegenüber den Basisbeschichtungszusammensetzungen, die das Verdickungsmittel (II) enthalten,

- eine verbesserte Scher- bzw. Ringleitungsstabilität,
- eine verbesserte Lagerstabilität,
- bei gleicher Viskosität einen geringeren Festkörpergehalt und
- verbesserte Applikationseigenschaften (z.B. geringere Ablaufneigung an senkrechten Flächen)

auf und liefern effektstärkere Lackierungen.

**Patentansprüche**

**1.** Verfahren zur Herstellung eines mehrschichtigen schützenden und/oder dekorativen Überzuges auf einer Substratoberfläche, bei welchem

(1) als Basisbeschichtungszusammensetzung eine wasserverdünnbare Basisbeschichtungszusammensetzung aufgebracht wird, wobei diese Basisbeschichtungszusammensetzung Wasser, ggf. organische Lösemittel, ein wasserverdünnbares Bindemittel, Pigmentteilchen und ein Verdickungsmittel enthält,

(2) aus der in Stufe (1) aufgebrachten Zusammensetzung ein Polymerfilm auf der Oberfläche gebildet wird,

(3) auf der so erhaltenen Basisschicht eine geeignete transparente Deckschichtzusammensetzung aufgebracht wird und anschließend

(4) die Basisschicht zusammen mit der Deckschicht eingebrannt wird,

dadurch gekennzeichnet, daß die Basisbeschichtungszusammensetzung als Verdickungsmittel ein Schichtsilikat in Kombination mit Xanthan enthält.

**2.** Verfahren nach Anspruch 1, dadurch gekennzeichnet, daß die Basisbeschichtungszusammensetzung als wasserverdünnbares Bindemittel ein wasserverdünnbares Polyurethanharz enthält.

**3.** Verfahren nach Anspruch 2, dadurch gekennzeichnet, daß die Basisbeschichtungszusammensetzung als zusätzliche Bindemittelkomponente ein wasserverdünnbares Melaminharz in einem Anteil von 1 bis 80 Gew.-%, bevorzugt 30 bis 70 Gew.-%, bezogen auf den Anteil des wasserverdünnbaren Polyurethanharzes, enthält.

4. Verfahren nach Anspruch 3, dadurch gekennzeichnet, daß die Basisbeschichtungszusammensetzung als weitere Bindemittelkomponente ein wasserverdünnbares Polyesterharz und/oder ein wasserverdünnbares Polyacrylatharz enthält, wobei das Gewichtsverhältnis Melaminharz zu Polyesterharz und/oder Polyacrylatharz 2:1 bis 1:4 beträgt und das Gewichtsverhältnis Melaminharz plus Polyester und/oder Polyacrylatharz zu Polyurethanharz 4:1 bis 1:4, bevorzugt 2:1 bis 1:2, besonders bevorzugt 1,3:1 bis 1:1,3 beträgt.

5. Verfahren nach Anspruch 2, dadurch gekennzeichnet, daß die Basisbeschichtungszusammensetzung als zusätzliche Bindemittelkomontente ein blockiertes Polyisocyanat zusammen mit einem wasserverdünnbaren Polyesterharz und/oder einem wasserverdünnbaren Polyacrylatharz enthält und das Gewichtsverhältnis Polyisocyanat plus Polyester- und/oder Polyacrylatharz zu Polyurethanharz 4:1 bis 1:4, bevorzugt 2:1 bis 1:2, beträgt.

6. Verfahren nach einem der Ansprüche 1 bis 5, dadurch gekennzeichnet, daß die Basisbeschichtungszusammensetzung Metallplättchenpigmente enthält.

7. Wasserverdünnbare Beschichtungszusammensetzungen, die zur Herstellung der Basisschicht von Zweischichtlackierungen des Basecoat/Clearcoat-Typs geeignet sind und die Wasser, ggf. organische Lösemittel, ein wasserverdünnbares Polyurethanharz als Bindemittel, Pigmentteilchen und ein Verdickungsmittel enthalten, dadurch gekennzeichnet, daß sie als Verdickungsmittel ein Schichtsilikat in Kombination mit Xanthan enthalten.

8. Wasserverdünnbare Beschichtungszusammensetzungen nach Anspruch 7, dadurch gekennzeichnet, daß sie als zusätzliche Bindemittelkomponente ein wasserverdünnbares Melaminharz in einem Anteil von 1 bis 80 Gew.-%, bevorzugt 30 bis 70 Gew.-%, bezogen auf den Anteil des wasserverdünnbaren Polyurethanharzes, enthalten.

9. Wasserverdünnbare Beschichtungszusammensetzungen nach Anspruch 8, dadurch gekennzeichnet, daß sie als weitere Bindemittelkomponente ein wasserverdünnbares Polyesterharz und/oder ein wasserverdünnbares Polyacrylatharz enthanlten, wobei das Gewichtsverhältnis Melaminharz zu Polyesterharz und/oder Polyacrylatharz 2:1 bis 1:4 beträgt das Gewichtsverhältnis Melaminharz plus Polyester- und/oder Polyacrylatharz zu Polyurethanharz 4:1 bis 1:4, bevorzugt 2:1 bis 1:2, besonders bevorzugt 1,3:1 bis 1:1,3, beträgt.

10. Waserverdünnbare Beschichtungszusammensetzungen nach einem der Ansprüche 7 bis 9, dadurch gekennzeichnet, daß sie Metallplättchenpigmente enthalten.

## Claims

1. Process for the production of a multicoat protective and/or decorative coating on a substrate surface, in which
   (1) a water-dilutable basecoat composition is applied as basecoat composition, this basecoat composition containing water, organic solvents if appropriate, a water-dilutable binder, pigment particles and a thickener,
   (2) a polymeric film is formed on the surface from the composition applied in stage (1),
   (3) a suitable transparent topcoat composition is applied to the basecoat obtained in this manner, and subsequently
   (4) the basecoat and the topcoat are baked together,
   characterised in that the basecoat composition contains a stratified silicate in combination with xanthan gum as thickener.

2. Process according to Claim 1, characterised in that the basecoat composition contains a water-dilutable polyurethane resin as water-dilutable binder.

3. Process according to Claim 2, characterised in that the basecoat composition contains as additional binder component a water-dilutable melamine resin in a proportion of 1 to 80% by weight, preferably 30 to 70% by weight, based on the proportion of the water-dilutable polyurethane resin.

4. Process according to Claim 3, characterised in that the basecoat composition contains as further binder component a water-dilutable polyester resin and/or a water-dilutable polyacrylate resin, the weight ratio of melamine resin to polyester resin and/or polyacrylate resin being 2:1 to 1:4 and the weight ratio of melamine resin plus polyester resin and/or polyacrylate resin to polyurethane resin being 4:1 to 1:4, preferably 2:1 to 1:2, particularly preferably 1.3:1 to 1:1.3.

5. Process according to Claim 2, characterised in that the basecoat composition contains as additional binder component a blocked polyisocyanate together with a water-dilutable polyester resin and/or a waterdilutable polyacrylate resin and the weight ratio of polyisocyanate plus polyester resin and/or polyacrylate resin to polyurethane resin is 4:1 to 1:4, preferably 2:1 to 1:2.

6. Process according to any of Claims 1 to 5, characterised in that the basecoat composition contains metallic pigments.

7. Water-dilutable basecoat composition which is suitable for the production of the basecoat of two-coat coatings of the basecoat/clearcoat type and which contains water, organic solvents if appropriate, a water-dilutable polyurethane resin as binder, pigment particles and a thickener, characterised in that it contains a stratified silicate in combination with xanthan gum as thickener.

8. Water-dilutable coating composition according to Claim 7, characterised in that it contains as additional binder component a water-dilutable melamine resin in a proportion from 1 to 80% by weight, preferably 30 to 70% by weight, based on the proportion of the water-dilutable polyurethane resin.

9. Water-dilutable coating composition according to Claim 8, characterised in that it contains as further binder component a water-dilutable polyester resin and/or a water-dilutable polyacrylate resin, the weight ratio of melamine resin to polyester resin and/or polyacrylate resin being 2:1 to 1:4, the weight ratio of melamine resin plus polyester resin and/or polyacrylate resin to polyurethane resin being 4:1 to 1:4, preferably 2:1 to 1:2, particularly preferably 1.3:1 to 1:1.3.

10. Water-dilutable coating composition according to any of Claims 7 to 9, characterised in that it contains metallic pigments.

**Revendications**

1. Procédé de fabrication d'un revêtement à plusieurs couches, protecteur et/ou décoratif, sur une surface de substrat, suivant lequel :

   (1) on applique, comme composition de revêtement de base, une composition de revêtement de base diluable dans l'eau, cette composition de revêtement de base contenant de l'eau, le cas échéant des solvants organiques, un liant diluable dans l'eau, des particules de pigment et un agent épaississant,
   (2) à partir de la composition appliquée à l'étape (1), on forme un film de polymère sur la surface,
   (3) sur la couche de base ainsi obtenue, on applique une composition de couche de recouvrement transparente appropriée, puis
   (4) on soumet la couche de base à une cuisson conjointement avec la couche de recouvrement,

   caractérisé par le fait que la composition de revêtement de base contient, comme agent épaississant, un silicate feuilleté en combinaison avec du xanthane.

2. Procédé selon la revendication 1, caractérisé par le fait que la composition de revêtement de base contient, comme liant diluable dans l'eau, une résine de polyuréthanne diluable dans l'eau.

3. Procédé selon la revendication 2, caractérisé par le fait que la composition de revêtement de base contient, comme composant de liant additionnel, une résine de mélamine diluable dans l'eau dans une fraction de 1 à 80% en poids, de préférence, de 30 à 70% en poids, par rapport à la fraction de la résine de polyuréthanne diluable dans l'eau.

4. Procédé selon la revendication 3, caractérisé par le fait que la composition de revêtement de base

contient, comme autre composant de liant, une résine de polyester diluable dans l'eau/ou une résine de polyacrylate diluable dans l'eau, le rapport en poids résine de mélamine à résine de polyester et/ou résine de polyacrylate s'élevant à 2:1 à 1:4, et le rapport en poids résine de mélamine plus résine de polyester et/ou résine de polyacrylate à résine de polyuréthanne s'élèvent à 4:1 à 1:4, de préférence, 2:1 à 1:2, de façon particulièrement préférée, 1,3:1 à 1:1,3.

**5.** Procédé selon la revendication 2, caractérisé par le fait que la composition de revêtement de base contient comme composant de liant additionnel, un polyisocyanate bloqué conjointement avec une résine de polyester diluable dans l'eau et/ou une résine de polyacrylate diluable dans l'eau, et le rapport en poids polyisocyanate plus résine de polyester et/ou résine de polyacrylate à résine de polyuréthanne s'élèvent à 4:1 à 1:4, de préférence, à 2:1 à 1:2.

**6.** Procédé selon l'une des revendications 1 à 5, caractérisé par le fait que la composition de revêtement de base contient des pigments métalliques en paillettes.

**7.** Compositions de revêtement diluables dans l'eau, qui sont appropriées pour la fabrication de la couche de base de laquages à deux couches du type revêtement de base/revêtement transparent, et qui contiennent de l'eau, le cas échéant des solvants organiques, une résine de polyuréthanne diluable dans l'eau en tant que liant, des particules de pigment et un agent épaississant, caractérisées par le fait qu'elles contiennent, comme agent épaississant, un silicate feuilleté en combinaison avec du xanthane.

**8.** Compositions de revêtement diluables dans l'eau selon la revendication 7, caractérisées par le fait qu'elles contiennent, comme composant de liant additionnel, une résine de mélamine diluable dans l'eau dans une fraction de 1 à 80% en poids, de préférence, de 30 à 70% en poids, par rapport à la fraction de la résine de polyuréthanne diluable dans l'eau.

**9.** Compositions de revêtement diluables dans l'eau selon la revendication 8, caractérisées par le fait qu'elles contiennent, comme autre composant de liant, une résine de polyester diluable dans l'eau et/ou une résine de polyacrylate diluable dans l'eau, le rapport en poids résine de mélamine à résine de polyester et/ou résine de polyacrylate s'élevant à 2:1 à 1:4, le rapport en poids résine de mélamine plus résine de polyester et/ou résine de polyacrylate à résine de polyuréthanne s'élevant à 4:1 à 1:4, de préférence, à 2:1 à 1:2, de façon particulièrement préférée, de 1,3:1 à 1:1,3.

**10.** Compositions de revêtement diluables dans l'eau selon l'une des revendications 7 à 9, caractérisées par le fait qu'elles contiennent des pigments métalliques en paillettes.